# FASCICULE DE BREVET EUROPEEN

(11) **EP 1 753 947 B1**
(45) Date de publication et mention de la délivrance du brevet: **13.02.2008**
(21) Numéro de dépôt: 05766706.5
(22) Date de dépôt: 30.05.2005
(51) Int. Cl.: F02D 11/10

(54) **PROCEDE DE CONTROLE D'UNE CONSIGNE DE COUPLE A APPLIQUER AUX ROUES D'UNE TRANSMISSION AUTOMATISEE POUR VEHICULE AUTOMOBILE ET DISPOSITIF CORRESPONDANT.**
VERFAHREN ZUR STEUERUNG EINES EINGESTELLTEN DREHMOMENTS FÜR RÄDER EINES AUTOMATIKGETRIEBES FÜR EIN KRAFTFAHRZEUG UND ENTSPRECHENDE VORRICHTUNG
METHOD FOR CONTROLLING A SET TORQUE TO BE APPLIED TO WHEELS OF AN AUTOMATIC TRANSMISSION FOR A MOTOR VEHICLE AND CORRESPONDING DEVICE

(30) Priorité: 28.05.2004 FR 0405802
(43) Date de publication de la demande: 21.02.2007
(73) Titulaire: RENAULT S.A.S., 92100 Boulogne Billancourt (FR)
(72) Inventeur: ROUDEAU, Frédéric, F-94400 VITRY SUR SEINE (FR); BRETHEAU, Jean, F-92160 ANTONY (FR); TURPIN, Thomas, F-91400 ORSAY (FR)
(86) Numéro de dépôt international: PCT/FR2005/050386
(87) Numéro de publication internationale: WO 2005/119033

(56) Documents cités:
- EP-A- 0 952 324
- WO-A-02/078996
- WO-A-03/006842
- FR-A- 2 827 339
- US-A- 5 082 096
- US-A1- 2002 049 525

## Description

La présente invention concerne le contrôle des impacts conséquents aux variations d'une consigne de couple à appliquer aux roues.

Une application particulièrement intéressante de l'invention concerne les transmissions automatisées, notamment les Boîtes à Commande Impulsionnelle dites BCI, les Boîtes à Commande Automatique dites BVA et les Boîtes de Vitesses Robotisées dites BVR, mais aussi les transmissions à rapport continu telles que les CVT (« Continuous Variable Transmission » en langue anglaise), les IVT (« Infinitely Variable Transmission» en langue anglaise) et les transmissions hybrides.

Une transmission automatisée de véhicule automobile comporte classiquement un bloc de commande recevant un ou plusieurs paramètres d'entrée interprétant entre autres, la volonté du conducteur. Puis, en fonction de la valeur de ces paramètres, le bloc de commande délivre une consigne de commande destinée aux roues du véhicule automobile.

Aussi, on trouve dans le document FR-A-2 827 339, au nom de la Demanderesse, un dispositif de contrôle du point de fonctionnement d'un groupe motopropulseur destiné à un véhicule automobile. Ce dispositif possède notamment un module d'interprétation de la volonté du conducteur appelé module IVC, qui génère une consigne de couple à appliquer à la roue à destination d'un bloc d'optimisation du point de fonctionnement du groupe moto-propulseur, dit module OPF.

Le module IVC détermine la consigne de couple en fonction de la volonté du conducteur, des caractéristiques du véhicule automobile et de son environnement.

Les impacts, ressentis par les passagers d'un véhicule automobile, sont dus à un saut de la consigne de couple, qui change de signe lors de passages d'une phase d'accélération à une phase de décélération par exemple. Ce changement de signe entraîne un mouvement de basculement du groupe motopropulseur, se traduisant pour les passagers du véhicule automobile par des à-coups ou des impacts vis-à-vis du conducteur.

En effet, le groupe motopropulseur comporte la plupart du temps deux points de fixation sur la caisse du véhicule automobile. Ceux-ci l'autorisent à se débattre entre deux positions extrêmes, selon que le véhicule automobile accélère ou décélère. Une alternance de phases d'accélération et de décélération entraîne des basculements du groupe motopropulseur sur l'une de ces deux positions pour compenser le jeu de l'ensemble de la transmission incluant celui de la boîte de transmission automatisée. Ce mouvement engendre des impacts transmis au conducteur par l'intermédiaire du châssis du véhicule automobile.

Afin de limiter les à-coups et impacts, l'invention propose d'adapter ladite consigne de couple à appliquer aux roues.

On connaît déjà dans l'état de la technique, des procédés et des dispositifs associés qui permettent d'effectuer des corrections pour tenter de limiter, voire de supprimer les impacts. Ils proposent de régler des paramètres de contrôle du fonctionnement d'un groupe motopropulseur afin de limiter l'impact de son basculement.

Ainsi, on connaît par le document FR-2 681 908, un dispositif qui peut corriger des paramètres de contrôle d'un moteur à combustion interne, à partir d'un modèle estimateur du couple moteur et d'un modèle estimateur de la transmission pour chaque rapport de vitesse. Ce dispositif détermine la correction à appliquer sur le couple moteur.

Il est également connu par le document FR-2 724 432 un procédé de corrections des oscillations du véhicule automobile. Ce procédé consiste à élaborer une valeur de correction à appliquer sur le couple moteur, à partir d'une variable déterminée par rapport à la position angulaire de l'arbre moteur.

Les corrections apportées par ces deux dispositifs portent sur le couple moteur. Cependant, sur la plupart des véhicules automobiles, le basculement du groupe motopropulseur se traduit plus particulièrement par des variations brusques du couple à appliquer aux roues du véhicule automobile. Étant donné que cette zone de variation de la consigne de couple à appliquer aux roues du véhicule automobile ne correspond pas forcément à la zone de variation du couple moteur autour de la valeur nulle, on ne peut pas limiter les impacts de façon optimale en apportant une correction sur ce couple moteur.

On connaît en outre par le document GB-2 368 406, une méthode pour contrôler les changements de signe de la consigne de couple de sortie du groupe moto-propulseur. Ceux-ci sont effectués lorsque le véhicule automobile atteint la vitesse désirée. Le contrôle présenté par le document GB-2368406 permet d'éviter les impacts dus à la transition.

La présente invention a pour but de proposer une stratégie de contrôle visant à adapter la consigne de couple à appliquer aux roues de manière différente de celles qui sont décrites dans les trois documents précités et capable en outre, de fonctionner avec tout type de transmission.

À cet effet, l'invention propose un procédé de contrôle d'une transmission automatisée d'un groupe motopropulseur pour un véhicule automobile. Il comprend une étape d'élaboration d'un premier signal de consigne de ,couple à appliquer aux roues qui est représentatif de la volonté du conducteur de véhicule automobile et qui comprend deux composantes respectivement statique et dynamique. On filtre la composante dynamique du signal de consigne en fonction d'au moins deux seuils prédéterminés définissant au moins trois zones de filtrage distinctes. On utilise un filtre d'ordre n dans la première et la troisième zone de filtrage et on impose dans la seconde zone de filtrage une pente maximale à la composante dynamique du premier signal de consigne, ladite pente maximale étant ajustable en fonction de données d'entrée prédéterminées.

Ce procédé limite les impacts dus au basculement du groupe motopropulseur vis-à-vis du ressenti du conducteur puisque le filtrage diminue la pente de la composante dynamique du premier signal de consigne en fonction des valeurs de couple atteintes. En effet, ce contrôle s'appuie sur le franchissement de seuils prédéterminés par la consigne de couple.

De préférence, on filtre la composante dynamique du signal de consigne destinée aux roues du véhicule automobile en fonction de seuils prédéterminés, ajustables en fonction de données d'entrée prédéterminées, et adaptés au sens de variation de ladite composante dynamique du signal de consigne (Cd_cond) destinée aux roues du véhicule automobile

Dans un mode de mise en oeuvre, on initialise la première valeur de la composante dynamique du signal de consigne filtré de chaque zone de filtrage avec la dernière valeur de la composante dynamique du signal de consigne filtré de la zone de filtrage précédente.

L'invention a également pour objet un dispositif de commande d'une transmission automatisée d'un groupe motopropulseur pour un véhicule automobile apte à délivrer un signal de consigne de couple à appliquer aux roues, adapté à la volonté du conducteur de véhicule automobile, comprenant deux composantes respectivement statique et dynamique. Le dispositif comprend un bloc de filtrage apte à filtrer ladite composante dynamique du signal de consigne.

Selon un mode de réalisation de l'invention, le bloc de filtrage comporte des moyens aptes à comparer à au moins deux seuils prédéterminés, la composante dynamique du signal de consigne destinée aux roues du véhicule automobile et adaptée à la volonté du conducteur. Il comprend en outre des moyens aptes à déterminer une zone de filtrage correspondant au seuil atteint par ladite composante dynamique du signal de consigne.

Selon un mode de réalisation de l'invention, le bloc de filtrage comporte des moyens aptes à appliquer un filtre d'ordre n ou une pente maximale à la composante dynamique du premier signal de consigne dans les zones de filtrage adaptées.

D'autres avantages et caractéristiques de l'invention apparaîtront à l'examen de la description détaillée d'un mode de mise en oeuvre de l'invention nullement limitatif, et des dessins annexés, sur lesquels :
- la figure 1 est un schéma synoptique d'un exemple de réalisation d'un bloc d'interprétation de la volonté du conducteur IVC,
- la figure 2 illustre un exemple d'une courbe de filtrage d'une composante dynamique de couple avec un saut de couple des valeurs positives aux valeurs négatives,
- la figure 3 illustre un exemple d'une courbe de filtrage d'une composant dynamique de couple avec un saut des valeurs de couple négatives aux valeurs positives.

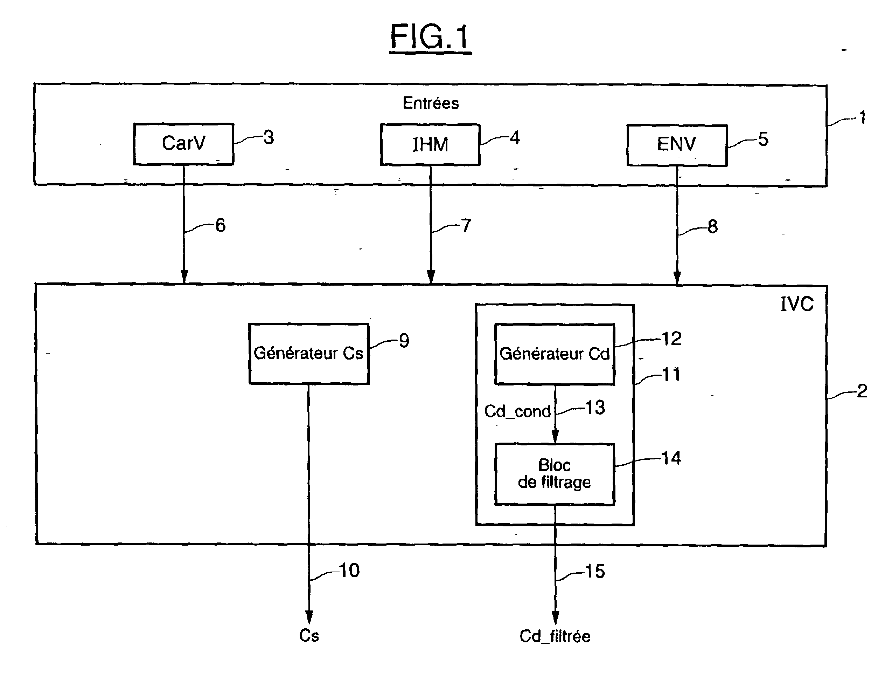

Sur la figure 1, on a représenté schématiquement un exemple d'un mode de réalisation du dispositif selon l'invention. Celui-ci est apte à délivrer une consigne de couple à appliquer aux roues d'un véhicule automobile. Ce dispositif peut être inclus dans une boîte de commande pour une transmission automatisée de véhicule automobile, non représentée sur la figure 1.

Tel qu'il est illustré sur la figure 1, le dispositif de commande comprend un bloc d'entrée 1 transmettant des données à un module d'interprétation de la volonté du conducteur IVC 2. Le bloc d'entrée comprend trois modules distincts délivrant respectivement des données liées aux caractéristiques du véhicule automobile CarV 3, à la volonté du conducteur IHM 4, (interface homme/machine), et à l'environnement du véhicule automobile ENV 5. Ces données sont délivrées au module IVC 2 respectivement par les connexions 6, 7 et 8. Les différentes données seront détaillées ci-après.

Le module IVC 2 comprend un bloc 9 générateur de la composante statique Cs (Générateur Cs) de la consigne de couple. Cette composante Cs est transmise par l'intermédiaire de la connexion 10.

La composante statique Cs se définit comme la future consigne de couple que le conducteur pourrait demander et que le groupe motopropulseur doit rendre immédiatement disponible au niveau des roues du véhicule automobile. Celle-ci évolue lentement. En effet, elle n'a pas pour but de répondre à une demande immédiate du conducteur, elle doit être le reflet d'une tendance imposée par le comportement du conducteur depuis une période prédéterminée.

Le module IVC 2 comprend en outre un bloc 11 délivrant la composante dynamique de la consigne de couple Cd_filtrée.

La consigne dynamique de couple définit le couple que le groupe motopropulseur doit rendre disponible au plus tôt au niveau des roues du véhicule automobile.

Le bloc 11 comprend un premier module 12 générant une consigne Cd_cond (Générateur Cd) correspondant à la composante dynamique de la consigne de couple adaptée à la volonté du conducteur. La consigne Cd_cond est transmise par la connexion 13 à un bloc de filtrage 14, intégré également dans le bloc 11. Le bloc de filtrage 14 délivre en sortie une consigne de couple filtrée Cd_filtrée correspondant à la composante dynamique de la consigne de couple Cd_cond, mais filtrée par le bloc de filtrage 14. Le bloc de filtrage 14 est un filtre anti à-coups. Le filtrage effectué par celui-ci a pour but de limiter les impacts liés au basculement du groupe motopropulseur. La consigne Cd_filtrée est transmise par la connexion 15.

Plus précisément, les trois modules CarV 3, IHM 4 et ENV 5 du bloc d'entrée 1 sont aptes à élaborer un signal de données à partir des signaux issus de capteurs non représentés et intégrés au véhicule automobile.

Le premier module CarV 3 du bloc d'entrée 1 est capable d'élaborer les données concernant les caractéristiques du véhicule automobile. Celles-ci sont programmées et mémorisées par le constructeur" pour caractériser le comportement du véhicule livré à un client.

Le deuxième module IHM 4 est capable d'élaborer des données concernant la volonté du conducteur. Ces données interprètent les souhaits du conducteur. Elles comprennent par exemple des signaux correspondant au levier de commande de la transmission du véhicule automobile ou encore aux pédales de frein ou d'accélération du véhicule automobile.

Le module ENV 5 est capable d'élaborer des signaux concernant l'environnement du véhicule automobile. Ces derniers permettent de tenir compte de l'état du véhicule automobile et de sa situation dans l'environnement. Ils comprennent par exemple des signaux correspondant à la vitesse du véhicule automobile, à l'état de la chaussée ou encore aux conditions météorologiques.

La valeur des paramètres et l'état des variables des données d'entrée transmises par ces trois modules sont stockés dans une mémoire commune à chaque élément du dispositif, non représentée.

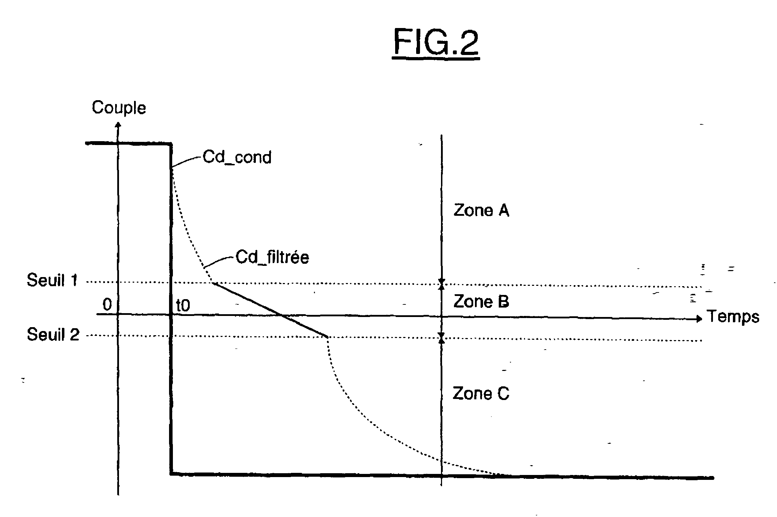

La figure 2 présente la consigne de couple filtrée Cd_filtrée par le bloc de filtrage 14 présenté sur la figure 1.

La consigne de couple Cd_cond évolue d'un couple positif vers un couple négatif. La consigne Cd_cond peut être un signal en échelon coupant l'abscisse temporelle en t₀. Le filtrage proposé est un filtrage évolutif, en fonction des valeurs atteintes par le couple Cd_cond, notamment pour limiter les effets de la transition brutale de la consigne de couple Cd_cond lorsqu'elle avoisine « 0 », en t₀.

Le filtrage s'effectue en fonction de deux seuils prédéterminés, Seuil1 et Seuil2 délimitant trois zones de filtrage distinctes : ZoneA, ZoneB et ZoneC. Ces seuils sont détectés par des moyens (non représentés) lors de la variation de la consigne Cd_cond.

Lorsque la consigne de couple Cd_cond est supérieure à la valeur Seuil1, on se trouve dans la ZoneA. On peut alors élaborer la consigne filtrée Cd_filtrée en appliquant un filtre d'ordre n classiquement utilisé par l'homme du métier.

Lorsque la consigne de couple Cd_cond se situe entre les valeurs Seuil1 1 et Seuil2, on peut obtenir la consigne filtrée Cd_filtrée en imposant une pente maximale de façon à ce que la valeur de la consigne filtrée Cd_filtrée rejoigne la valeur limite de la consigne de couple Cd_cond.

La pente maximale peut-être calibrée par le constructeur en fonction de chaque type de véhicule automobile.

Enfin, si la consigne de couple Cd_cond est inférieure à la valeur de Seuil2, on se trouve alors dans la ZoneC. De même que pour la ZoneA, on peut obtenir la consigne de couple filtrée Cd_filtrée en utilisant un filtre d'ordre n.

Dans chaque zone de filtrage, ZoneA, ZoneB et ZoneC, le filtre est appliqué par des moyens de filtrage intégrés au bloc de filtrage 14 (non représentés).

Par ailleurs, afin de garantir la continuité de la consigne filtrée Cd_filtrée lors du changement de zone, on peut initialiser le filtre avec la dernière valeur prise par la consigne de couple filtrée Cd_filtrée dans la zone précédente.

La consigne filtrée Cd_filtrée est moins perturbatrice que la composante dynamique de couple Cd_cond. En effet, un signal en échelon implique le passage quasiment instantané d'une valeur de couple positive à une valeur de couple négative. Le filtrage selon l'invention permet d'adoucir la pente de la consigne, notamment pour des valeurs nulles. En outre, en imposant une pente maximale dans la zoneB, on conserve un temps de réponse de la consigne filtrée Cd_filtrée optimale.

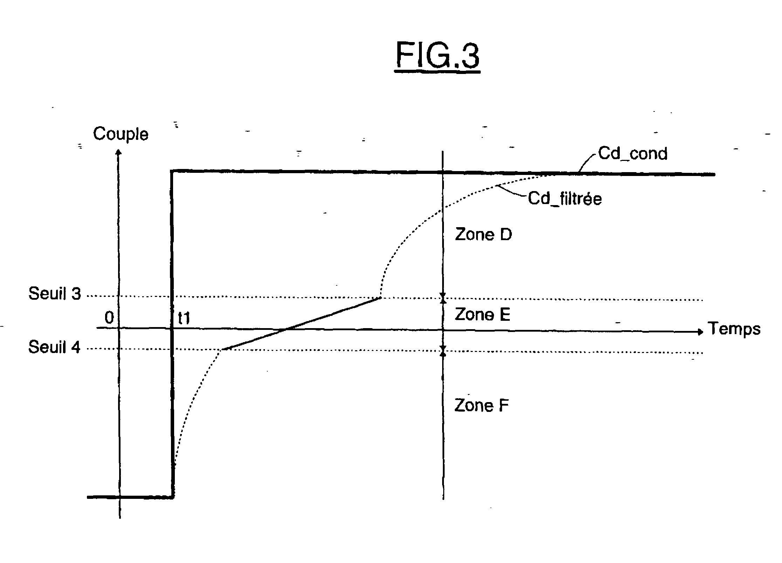

La figure 3 illustre le processus de filtrage dans le cas où la consigne Cd_cond évolue d'un couple positif vers un couple négatif. La consigne Cd_cond peut également être un signal en échelon coupant l'abscisse temporelle en t₁.

Dans ce cas, le filtrage s'effectue de la même façon que pour le cas précédent, en fonction de deux seuils prédéterminés Seuil3 et Seuil4, qui délimitent respectivement trois zones de filtrage distinctes ZoneD, ZoneE et ZoneF.

On peut alors appliquer dans la première et la troisième zone un filtre d'ordre n de la même manière que pour la ZoneA et la ZoneB de la figure 2.

Dans la ZoneE, on impose une pente maximale à la consigne de couple de façon à rejoindre la valeur limite de la consigne de couple CD_cond.

De même, afin de garantir la continuité de la consigne filtrée Cd_filtrée lors du changement de zone, on peut initialiser le filtre avec la dernière valeur prise par la consigne de couple filtrée Cd_filtrée dans la zone précédente.

La valeur des différents seuils, Seuil1, Seuil2, Seuil3 et Seuil4, des pentes maximales des zones B et E, et des paramètres de réglage des filtres d'ordre n des zones A, C, D et F, peut être ajustée dynamiquement en fonction de données d'entrée issues des blocs 4 et/ou 5, comme la vitesse du véhicule automobile, la sportivité du conducteur ou encore le régime du moteur thermique, par exemple.

## Revendications

1. Procédé de contrôle d'une transmission automatisée d'un groupe motopropulseur pour un véhicule automobile, comprenant une étape d'élaboration d'un premier signal de consigne de couple à appliquer aux roues qui est représentatif de la volonté du conducteur de véhicule automobile et qui comprend deux composantes respectivement statique (Cs) et dynamique (Cd_cond), **caractérisé en ce que** l'on filtre la composante dynamique (Cd_cond) du signal de consigne en fonction d'au moins deux seuils prédéterminés définissant au moins trois zones de filtrage distinctes, on utilise un filtre d'ordre n dans la première et la troisième zone de filtrage et on impose dans la seconde zone de filtrage une pente maximale à la composante dynamique du premier signal de consigne (Cd_cond), ladite pente maximale étant ajustable en fonction de données d'entrée prédéterminées.

2. Procédé selon la revendication 1, **caractérisé par le fait que** l'on filtre la composante dynamique du signal de consigne (Cd_cond) destinée aux, roues du véhicule automobile en fonction de seuils prédéterminés, ajustables en fonction de données d'entrée prédéterminées, et adaptés au sens de variation de ladite composante dynamique du signal de consigne (Cd_cond) destinée aux roues du véhicule automobile.

3. Procédé selon la revendication 2, **caractérisé par le fait que** l'on initialise la première valeur de la composante dynamique du signal de consigne filtré (Cd_filtrée) de chaque zone de filtrage avec la dernière valeur de la composante dynamique du signal de consigne filtré (Cd_filtrée) de la zone de filtrage précédente.

4. Dispositif de commande d'une transmission automatisée d'un groupe motopropulseur pour un véhicule automobile apte à délivrer un signal de consigne de couple à appliquer aux roues, adapté à la volonté du conducteur de véhicule automobile, comprenant deux composantes respectivement statique (Cs) et dynamique (Cd_cond), **caractérisé par le fait qu**'il comprend un bloc de filtrage (14) apte à filtrer ladite composante dynamique du signal de consigne (Cd_cond), ledit bloc de filtrage (14) comportant des moyens aptes à comparer à au moins deux seuils prédéterminés, la composante dynamique du signal de consigne (Cd_filtrée) destinée aux roues du véhicule automobile et adaptée à la volonté du conducteur, et des moyens aptes à déterminer une zone de filtrage correspondant au seuil atteint par ladite composante dynamique du signal de consigne.

5. Dispositif selon la revendication 4, **caractérisé par le fait que** le bloc de filtrage (14) comporte des moyens aptes à appliquer un filtre d'ordre n ou une pente maximale à la composante dynamique du premier signal de consigne dans les zones de filtrage adaptées.

## Claims

1. Method of controlling an automatic transmission of a power train for a motor vehicle, comprising a step for generating a first torque set-point signal to be applied to the wheels which is representative of the wishes of the driver of the motor vehicle and which comprises two components, respectively static (Cs) and dynamic (Cd_cond), **characterized in that** the dynamic component (Cd_cond) of the set-point signal is filtered according to at least two predetermined thresholds defining at least three separate filtering zones, a filter of order n is used in the first and the third filtering zones and a maximum slope is imposed in the second filtering zone on the dynamic component of the first set-point signal (Cd_cond), said maximum slope being adjustable according to predetermined input data.

2. Method according to Claim 1, **characterized in that** the dynamic component of the set-point signal (Cd_cond) intended for the wheels of the motor vehicle is filtered according to predetermined thresholds, adjustable according to predetermined input data, and adapted to the direction of variation of said dynamic component of the set-point signal (Cd_cond) intended for the wheels of the motor vehicle.

3. Method according to Claim 2, **characterized in that** the first value of the dynamic component of the filtered set-point signal (Cd_filtered) of each filtering zone is initialized with the last value of the dynamic component of the filtered set-point signal (Cd_filtered) of the preceding filtering zone.

4. Device for controlling an automatic transmission of a power train for a motor vehicle suitable for delivering a torque set-point signal to be applied to the wheels, adapted to the wishes of the driver of the motor vehicle, comprising two components, respectively static (Cs) and dynamic (Cd_cond), **characterized in that** it comprises a filtering block (14) suitable for filtering said dynamic component of the set-point signal (Cd_cond), said filtering block (14) comprising means suitable for comparing with at least two predetermined thresholds, the dynamic component of the set-point signal (Cd_filtered) intended for the wheels of the motor vehicle and adapted to the wishes of the driver, and means suitable for determining a filtering zone corresponding to the threshold reached by said dynamic component of the set-point signal.

5. Device according to Claim 4, **characterized in that** the filtering block (14) comprises means suitable for applying a filter of order n or a maximum slope to the dynamic component of the first set-point signal in the appropriate filtering zones.

## Patentansprüche

1. Verfahren zur Steuerung eines automatisierten Getriebes eines Antriebsaggregats für ein Kraftfahrzeug, das einen Schritt der Erarbeitung eines ersten an die Räder anzuwendenden Drehmoment-Sollsignals aufweist, das für den Willen des Fahrers des Kraftfahrzeugs repräsentativ ist und das zwei Komponenten, eine statische (Cs) bzw. eine dynamische (Cd_cond) aufweist, **dadurch gekennzeichnet, dass** die dynamische Komponente (Cd_cond) des Sollsignals in Abhängigkeit von mindestens zwei vorbestimmten Schwellwerten gefiltert wird, die mindestens drei unterschiedliche Filterzonen definieren, dass ein Filter der Ordnung n in der ersten und der dritten Filterzone verwendet wird, und dass in der zweiten Filterzone der dynamischen Komponente des ersten Sollsignals (Cd_cond) eine maximale Steilheit aufgezwungen wird, wobei die maximale Steilheit in Abhängigkeit von vorbestimmten Eingangsdaten einstellbar ist.

2. Verfahren nach Anspruch 1, **dadurch gekennzeichnet, dass** die dynamische Komponente des Sollsignals (Cd_cond), die für die Räder des Kraftfahrzeugs bestimmt ist, in Abhängigkeit von vorbestimmten Schwellwerten gefiltert wird, die in Abhängigkeit von vorbestimmten Eingangsdaten einstellbar und an die Veränderungsrichtung der dynamischen Komponente des Sollsignals (Cd_cond) angepasst sind, die für die Räder des Kraftfahrzeugs bestimmt ist.

3. Verfahren nach Anspruch 2, **dadurch gekennzeichnet, dass** der erste Wert der dynamischen Komponente des gefilterten Sollsignals (Cd_Filterwert) jeder Filterzone mit dem letzten Wert der dynamischen Komponente des gefilterten Sollsignals (Cd_Filterwert) der vorhergehenden Filterzone initialisiert wird.

4. Vorrichtung zur Steuerung eines automatisierten Getriebes eines Antriebsaggregats für ein Kraftfahrzeug, die ein an die Räder anzuwendendes Drehmoment-Sollsignal liefern kann, das an den Willen des Fahrers des Kraftfahrzeugs angepasst ist und das zwei Komponenten, eine statische (Cs) bzw. eine dynamische (Cd_cond) aufweist, **dadurch gekennzeichnet, dass** sie einen Filterblock (14) aufweist, der in der Lage ist, die dynamische Komponente des Sollsignals (Cd_cond) zu filtern, wobei der Filterblock (14) Mittel, die fähig sind, die dynamische Komponente des Sollsignals (Cd_Filterwert), die für die Räder des Kraftfahrzeugs bestimmt und an den Willen des Fahrers angepasst ist, mit mindestens zwei vorbestimmten Schwellwerten zu vergleichen, und Mittel aufweist, die fähig sind, eine Filterzone zu bestimmen, die dem von der dynamischen Komponente des Sollsignals erreichten Schwellwert entspricht.

5. Vorrichtung nach Anspruch 4, **dadurch gekennzeichnet, dass** der Filterblock (14) Mittel aufweist, die fähig sind, ein Filter der Ordnung n oder eine maximale Steilheit an die dynamische Komponente des ersten Sollsignals in den angepassten Filterzonen anzuwenden.
